# EUROPÄISCHE PATENTSCHRIFT

(11) **EP 3 331 787 B1**
(45) Veröffentlichungstag und Bekanntmachung des Hinweises auf die Patenterteilung: **27.04.2022**
(21) Anmeldenummer: 16747505.2
(22) Anmeldetag: 03.08.2016
(51) Int. Cl.: B65G 57/30, B65G 59/06

(54) **PALETTEN-STAPELVORRICHTUNG**
PALLETS STACKING AND DISPENSING DEVICE
SYSTÈME D'EMPILAGE ET DE DISTRIBUTION DE PALETTES

(30) Priorität: 03.08.2015 DE 102015010072
(43) Veröffentlichungstag der Anmeldung: 13.06.2018
(73) Patentinhaber: Kamm, Wilhelm, 35104 Lichtenfels (DE)
(72) Erfinder: Kamm, Wilhelm, 35104 Lichtenfels (DE)
(74) Vertreter: Röthinger, Rainer
(86) Internationale Anmeldenummer: PCT/EP2016/068505
(87) Internationale Veröffentlichungsnummer: WO 2017/021432

(56) Entgegenhaltungen:
- EP-A2- 2 772 408
- CA-A1- 2 215 759
- DE-A1- 2 314 007
- DE-A1- 3 443 378
- DE-A1- 4 416 218
- DE-B- 1 280 749
- DE-U1- 29 819 355
- US-A- 2 693 898
- US-A- 3 273 751

## Beschreibung

### Technisches Gebiet

Die vorliegende Offenbarung betrifft allgemein die Aufbewahrung von leeren Paletten. Konkret wird eine Vorrichtung für das Stapeln solcher Paletten angegeben.

### Hintergrund

In Märkten und anderen Betrieben werden die zu verkaufenden oder weiterzuverarbeitenden Produkte häufig auf Paletten angeliefert. Nach dem Entladen der Paletten müssen diese platzsparend für den Abtransport aufbewahrt werden. Dazu werden die leeren Paletten in der Regel gestapelt und an einem bestimmten Ort eingelagert.

Das Stapeln von Paletten durch Mitarbeiter ist eine kraftzehrende Aufgabe und birgt darüber hinaus Verletzungsrisiken. Aus diesem Grund wurden Vorrichtungen für das Stapeln der leeren Paletten entwickelt. Manche dieser Paletten-Stapelvorrichtungen werden mittels Hubwägen beschickt, die für das Bewegen der beladenen Paletten ohnehin vorhanden sind.

So lehrt die DE 102 10 315 B4 eine mittels eines Hubwagens beschickbare Paletten-Stapelvorrichtung mit Seitenteilen, die zwischen sich einen Stapelraum begrenzen. An den Seitenteilen sind mehrere Tragelemente für die zu stapelnden Paletten vorgesehen. Jedes Tragelement ist zwischen einer in den Stapelraum hinein ragenden Tragposition und einer aus dem Stapelraum entfernten Freigabeposition verschwenkbar. In der Trageposition lagern die Tragelemente die gestapelten Paletten oberhalb einer Grundfläche, auf der die Stapelvorrichtung aufsteht. In der Freigabeposition kann der Palettenstapel mittels des Hubwagens entnommen werden.

Eine ähnliche Paletten-Stapelvorrichtung ist aus der WO 96/31420 A bekannt. Dort können die für die Paletten vorgesehenen Tragelemente mittels elektromagnetischer Einrichtungen oder auf mechanische Weise in ihre jeweilige Freigabeposition bewegt werden.

Die DE 298 16 135 U1 offenbart eine an einem Hubwagen angebrachte und daher mobile Paletten-Stapelvorrichtung. Die Tragelemente dieser Vorrichtung sind über

Seilzüge mit einem Zughebel verbunden. Durch Federkraft werden die Tragelemente in ihre Trageposition gedrängt. Der Zughebel gestattet es, die Tragelemente entgegen der Federkraft in die Freigabeposition zu bewegen.

Die EP 2 772 408 A2 lehrt einen mobilen Transportpalettenstapler mit einem U-förmigen Grundgerüst. Im unteren Bereich des Grundgerüsts ist ein höhenverstellbarer Rahmen mit bewegbaren Greifen vorgesehen. Die Greifer werden über einen Hebel betätigt, welcher sich gegenüber einer Palettenzufuhr-Öffnung des U-förmigen Grundgerüsts befindet. EP 2 772 408 A2 offenbart eine Paletten-Stapelvorrichtung nach dem Oberbegriff des Anspruchs 1.

Die DD 116 190 offenbart ein mit einem Palettenförderer ausgerüstetes Palettenmagazin, welches mit zwei Paar Klauen ausgestattet ist. Das Palettenmagazin umfasst einen hydraulischen Zylinder, über welchen die Klauenpaare betätigt werden.

Die Druckschrift DE 44 16 218 A1 lehrt eine Vorrichtung zum Entnehmen und Zuführen von Paletten in einen Palettenstapel, gekennzeichnet durch mindestens eine Hubeinrichtung zum Anheben mindestens eines Teils des Palettenstapels. Die Hubeinrichtung weist ferner verschwenkbare Hakenelemente auf.

Die Druckschrift US 2 693 898 A offenbart eine Vorrichtung mit zwei parallelen drehbar gelagerten Elementen, welche jeweils Räder mit radial erstreckenden Vorsätzen aufweisen, wobei die Vorsätze ausgebildet sind, seitlich in eine Palette einzugreifen und diese zu halten.

Die Druckschrift US 3 273 751 A lehrt eine Vorrichtung zum Ausgeben von Paletten aus einem vertikalen Palettenstapel umfassend einen Rahmen und ein Paar rotierbarer Wellen, welche Räder mit Fortsätzen aufweisen.

Die Druckschrift CA 2 215 759 A1 offenbart eine Vorrichtung zum Palettenstapeln und -entstapeln. Eine Vielzahl von Fortsätzen ist auf einem vertikal bewegbaren Hubelement vorgesehen. Mittels Ansteuerung von Hubzylinder, welche die Fortsätze bewegen, kann ein Benutzer die Vorrichtung ohne manuelle Betätigung bedienen. Die Druckschrift DE 12 80 749 A1 offenbart eine Vorrichtung zur Handhabung eines Stapels von kastenförmigen Stückgut, wobei zu beiden sich gegenüberliegenden Seiten der Vorrichtung je mindestens ein als zweiarmiger Hebel ausgebildeter Greifer schwenkbar gelagert ist, der in und außer Eingriff mit dem Stückgut bringbar ist.

Es ist eine Paletten-Stapelvorrichtung anzugeben, welche auf einfache und zuverlässige Weise betätigbar ist.

### Kurzer Abriss

Es wird eine Paletten-Stapelvorrichtung angegeben. Die Paletten-Stapelvorrichtung umfasst zwei Seitenteile, die zwischen sich einen Stapelraum begrenzen, wobei jedes der Seitenteile eine Welle aufnimmt und wobei jede Welle drehfest mit einem Tragelement gekoppelt ist. Das Tragelement ist durch Drehen der jeweiligen Welle beweglich zwischen einer in den Stapelraum hinein ragenden Tragposition zur Stapelung von Paletten oberhalb einer Grundfläche und einer aus dem Stapelraum entfernten Freigabeposition. Die Trageelemente weisen jeweils einen auf die Grundfläche hin gerichteten Paletten-Anlagebereich auf, um bei Anlage an eine Palette, die von der Grundfläche aus angehoben wird, von der Tragposition in die Freigabeposition bewegt zu werden. Die Paletten-Stapelvorrichtung umfasst ferner ein Getriebe zum Umsetzen eines an einer der Wellen angreifenden Drehmoments in eine Drehbewegung der anderen Welle derart, dass die Tragelemente gemeinsam von der Tragposition in die Freigabeposition überführbar sind.

Das Getriebe kann ferner dazu ausgebildet sein, eine reziproke Umsetzung derart durchzuführen, dass die Tragelemente zusammen aus der Freigabeposition wieder in die Tragposition überführbar sind. Alternativ oder zusätzlich hierzu können die Tragelemente durch eine Hilfskraft (z.B. eine Federkraft oder die Schwerkraft) von der Freigabeposition in die Tragposition gebracht werden.

In einer Ausgestaltung umfasst die Paletten-Stapelvorrichtung ferner einen mit einer der Wellen gekoppelten Hebel zur Beaufschlagung der Welle mit einem Drehmoment. Der Hebel kann als Handhebel ausgebildet sein. In manchen Implementierungen kann mit jeder der beiden Wellen ein Hebel, insbesondere ein Hand- oder Fußhebel, gekoppelt sein.

Die Seitenteile können - in Bezug auf eine Palettenzuführung in den Stapelraum - jeweils ein vorderes und ein hinteres Ende aufweisen. Der oder die Hebel können in diesem Fall im Bereich des vorderen Endes bzw. der vorderen Enden vorgesehen sein. Mit anderen Worten kann der Hebel oder können die Hebel an der Zuführseite der Paletten-Stapelvorrichtung angeordnet werden.

In einer Realisierung ist zwischen den Seitenteilen im Bereich der hinteren Enden ein die Palettenzuführung in den Stapelraum begrenzender Anschlag vorgesehen. Der Anschlag kann mit den Seitenteilen verbunden oder getrennt davon vorgesehen werden. Beispielsweise kann der Anschlag an einem die beiden Seitenteile an deren hinteren Enden verbindenden Rahmenteil ausgebildet sein. So kann der Anschlag von dem als Verbindung vorgesehenen Rahmenteil gebildet werden.

Die beiden Seitenteile können auch an ihren vorderen Enden miteinander verbunden sein. Die Verbindung kann allgemein mittels eines Rahmenteils erfolgen, welches eine Zuführung einer oder mehrerer Paletten in den Stapelraum hinein nicht behindert. So kann dieses Rahmenteil beispielsweise als Bügel ausgestaltet werden, unter dem hindurch eine Palettenzuführung in den Stapelraum erfolgen kann. Das verbindende Rahmenteil kann auch im Bereich einer Grundfläche vorgesehen sein.

Das die Seitenteile an ihren vorderen Enden verbindende Rahmenteil kann zumindest teilweise beweglich oder entfernbar ausgebildet sein, um die Vorderseite des Stapelraums für eine Entnahme des gesamten Palettenstapels freizugeben. So kann das entsprechende Rahmenteil über ein Gelenk oder anderweitig beweglich an einem der Seitenteile vorgesehen sein. Ferner kann das Rahmenteil aus mehreren Einzelteilen bestehen, die jeweils für sich genommen entfernbar und/oder beweglich sind, um eine Entnahme des gesamten Palettenstapels zu ermöglichen.

Das die Wellen miteinander koppelnde Getriebe kann ein Hebelgetriebe sein. Das Hebelgetriebe kann zwei Hebelglieder umfassen, die jeweils mit einer der Wellen drehfest gekoppelt sind. Des Weiteren kann das Hebelgetriebe ein die zwei Hebelglieder miteinander koppelndes Gestänge umfassen.

In einer Implementierung ist das Getriebe ausgebildet, um eine Drehbewegung der einen Welle in eine gegensinnige Drehbewegung der anderen Welle umzusetzen. Wird beispielsweise eine der Wellen im Uhrzeigersinn gedreht, wandelt das Getriebe diese Drehbewegung derart, dass sich die andere Welle im Gegenuhrzeigersinn dreht.

Wie eingangs erwähnt, können die Seitenteile in Bezug auf eine Plattenzuführung in den Stapelraum jeweils ein vorderes und ein hinteres Ende aufweisen. Das Getriebe kann allgemein im Bereich der hinteren Enden der Seitenteile vorgesehen sein. So kann sich das Getriebe im Bereich eines die zwei Seitenteile an deren hinteren Ende verbindenden Rahmenteils befinden. Insbesondere kann dieses Rahmenteil ein Gehäuse bilden oder Teil eines Gehäuses sein, in dem das Getriebe aufgenommen ist. Alternativ oder zusätzlich hierzu können Elemente des Getriebes an dem Rahmenteil gelagert sein.

Die hier vorgestellte Paletten-Stapelvorrichtung kann Füße besitzen. Beispielsweise kann jedes Seitenteil sowohl an seinem vorderen als auch an seinem hinteren Ende jeweils einen Fuß aufweisen. Mittels der Füße können die Seitenteile beabstandet von der Grundfläche angeordnet werden. Auf diese Weise kann ein Hubwagen unterhalb der Seitenteile in die Vorrichtung eingefahren werden, um diese (mit oder ohne gestapelten Paletten) anzuheben und zu transportieren.

Mit jeder Welle können ein, zwei oder mehr Tragelemente drehfest gekoppelt sein. Bei zwei oder mehr Tragelementen pro Welle können diese in Längsrichtung der Welle voneinander beabstandet vorgesehen sein.

Die Tragelemente können gemeinsam eine Paletten-Auflage-Ebene definieren. Beispielsweise kann die Paletten-Auflage-Ebene durch die axialen Erstreckungen zweier sich gegenüber liegender Tragelemente definiert werden. Alternativ oder zusätzlich hierzu kann die Paletten-Auflage-Ebene durch die vier Auflage-Bereiche zweier sich gegenüber liegender Tragelement-Paare definiert werden.

Die Paletten-Auflage-Ebene kann um mehr als eine nominelle Paletten-Höhe oberhalb der Grundfläche liegen. Auf diese Weise kann unterhalb der Paletten-Auflage-Ebene

Freiraum für das Zuführen einer weiteren Palette geschaffen werden. Die Paletten-Auflage-Ebene kann ferner derart ausgebildet sein, dass der darunter liegende Freiraum ausreicht, um die Tragelemente in die Freigabeposition zu bewegen. Allgemein kann die Palletten-Auflage-Ebene um weniger als zwei nominelle Paletten-Höhen oberhalb der Grundfläche liegen. Je nach Typ der verwendeten Paletten kann die nominelle Platten-Höhe beispielweise ungefähr 12 bis 16 cm betragen.

Der Anlagebereich kann allgemein, und insbesondere in der Tragposition, schräg zur Grundfläche verlaufen.

Die Paletten-Stapelvorrichtung kann derart ausgebildet sein, dass die Tragelemente selbsttätig aus der Freigabeposition zur Tragposition zurückkehren. Gemäß einer ersten Variante erfolgt die Rückkehr von der Freigabeposition zur Tragposition selbsttätig aufgrund der auf die Tragelemente wirkenden Schwerkraft. Gemäß einer weiteren Variante sind ein oder mehrere Federn oder andere elastische Elemente vorgesehen, welche die Tragelemente selbsttätig von der Freigabeposition in die Tragposition überführen.

Die Paletten-Stapelvorrichtung kann transportabel ausgebildet sein. Zu diesem Zweck kann die Vorrichtung mit Handgriffen oder Angriffspunkten für einen Hubwagen versehen sein. Derartige Handgriffe oder Angriffspunkte können insbesondere im Bereich der Seitenteile ausgebildet sein.

### Kurze Beschreibung der Zeichnungen

Weitere Einzelheiten, Funktionen und Vorteile der hier vorgestellten Paletten-Stapelvorrichtung werden unter Bezugnahme auf ein exemplarisches Ausführungsbeispiel sowie die Figuren näher beschrieben. Es zeigen:
- Fig. 1: eine perspektivische Vorderansicht einer Paletten-Stapelvorrichtung gemäß einem Ausführungsbeispiel;
- Fig. 2: eine Rückansicht der Paletten-Stapelvorrichtung gemäß Fig. 1;
- Fig. 3: eine perspektivische Teilansicht der Paletten-Stapelvorrichtung gemäß Fig. 1 von hinten; und
- Fig.4: eine perspektivische Ansicht der Paletten-Stapelvorrichtung ähnlich der Fig. 1 mit einer aufgenommenen Palette.

### Detaillierte Beschreibung

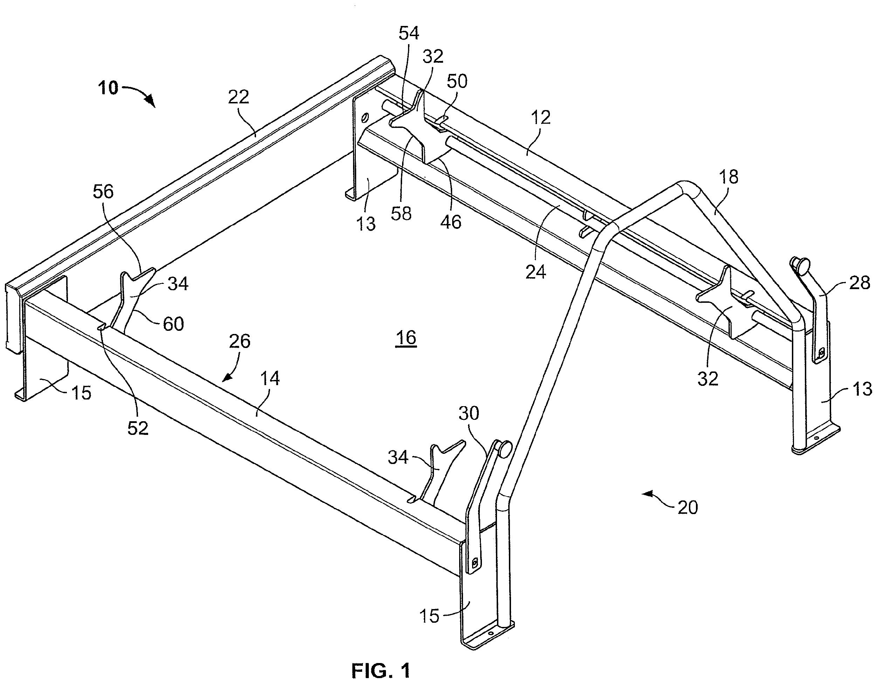

Fig. 1 zeigt eine perspektivische Ansicht von vorne einer allgemein mit 10 bezeichneten Paletten-Stapelvorrichtung gemäß einem Ausführungsbeispiel. Im Folgenden werden die Begriffe "vorne" und "hinten" in Bezug auf eine Zufuhrrichtung einer zu stapelnden Palette verwendet. Die Zufuhrrichtung erstreckt sich in Fig. 1 ungefähr von rechts nach links. Die Begriffe "unten" und "oben" beziehen sich auf eine Richtung zu einer bzw. weg von einer Grundfläche, auf der die Stapelvorrichtung 10 aufsteht.

Die Stapelvorrichtung 10 gemäß Fig. 1 umfasst zwei parallel zueinander verlaufende Seitenteile 12, 14, die zu einem Rahmen der Vorrichtung 10 gehören. Die Seitenteile 12, 14 umfassen jeweils ein torsionssteifes Hohlprofil. Das entsprechende Hohlprofil jedes Seitenteils 12, 14 ist als Schalenprofil ausgebildet. In anderen Ausführungsformen kann jedes Seitenteil 12, 14 zwei zusammen geschweißte Schalenprofile umfassen.

Jedes der beiden Seitenteile 12, 14 besitzt an seinem vorderen und hinteren Enden jeweils einen Fuß 13, 15 zur stationären Anordnung der Stapelvorrichtung 10 auf der Grundfläche. Über die Füße 13, 15 kann die Stapelvorrichtung 10 durch Schrauben oder anderweitig auf der Grundfläche verankert werden. Zu diesem Zweck kann jeder Fuß mit geeigneten Mitteln wie beispielsweise einer Durchgangsbohrung zur Aufnahme einer Schraube ausgebildet sein.

Die Füße 13, 15 halten die Seitenteile 12, 14 beabstandet von der Grundfläche. Auf diese Weise kann ein Hubwagen in den Freiraum zwischen der Unterseite der Seitenteile 12, 14 und der Grundfläche eingefahren werden, um die Vorrichtung 10 als Ganzes (mit oder ohne Paletten) anzuheben und zu transportieren.

Die beiden Seitenteile 12, 14 begrenzen zwischen sich einen mit dem Bezugszeichen 16 versehenen Stapelraum. Der Stapelraum 16 besitzt eine rechteckige Grundfläche, die in allen Richtungen etwas größer ist als die Grundfläche des zu stapelnden Palettentyps.

An ihren vorderen Enden sind die beiden Seitenteile 12, 14 durch ein als Bügel 18 ausgebildetes Rahmenteil miteinander verbunden. Der Bügel 18 kann rohrförmig ausgebildet werden. Er besitzt im Ausführungsbeispiel die Gestalt eines auf dem Kopf stehenden, stumpfen V und definiert eine Zuführöffnung 20 für eine Plattenzuführung in den Stapelraum 16. Eine zu stapelnde Palette kann so unter dem Bügel 18 hindurch in den Stapelraum 16 gelangen.

Im Ausführungsbeispiel gemäß Fig. 1 ist der Bügel 18 fest mit den beiden Seitenteilen 12, 14 verbunden, um diese relativ zueinander zu stabilisieren. In anderen Ausführungsbeispielen kann der Bügel 18 fortgelassen werden oder zumindest bereichsweise verschwenkbar oder entfernbar ausgebildet sein, um die Zuführöffnung 20 nach oben hin zur Entnahme des ganzen Palettenstapels freizugeben. Beispielsweise kann der Bügel 18 zweiteilig ausgebildet sein. In diesem Fall kann je ein Bügelteil schwenkbar an einem der beiden Seitenteile 12, 14 angelenkt sein. Ferner können die beiden Bügelteile in einem mittigen Bereich der Zuführöffnung 20 über einen entfernbaren Bolzen oder ein anderes Verbindungsmittel zu Stabilisierungszwecken lösbar miteinander verbunden sein.

In einem anderen Ausführungsbeispiel kann anstelle des Bügels 18 oder zusätzlich zum Bügel 18 im Bereich der Grundfläche eine als Flachprofil ausgeführte Verbindung zwischen den beiden Seitenteilen 12, 14 an deren vorderem Ende vorgesehen werden. Beispielsweise können zu diesem Zweck die beiden vorderseitigen Füße 13, 15 im Bereich der Grundfläche miteinander verbunden werden. Ist die entsprechende Verbindung als Flachprofil ausgebildet, kann sie problemlos mittels eines Hubwagens überfahren werden, wenn eine zu stapelnde Palette in den Stapelraum 16 transportiert wird. Die Verbindung kann beispielsweise einen Flach-Bandstahl umfassen.

An ihren hinteren Enden sind die beiden Seitenteile 12, 14 durch ein weiteres Rahmenteil 22 verbunden. Das hintere Rahmenteil 22 bildet gleichzeitig einen Anschlag, der den Palettenzuführweg in den Stapelraum 16 hinein begrenzt. In anderen Ausführungsbeispielen wäre es auch denkbar, diesen Anschlag für die Palettenzuführung getrennt vom hinteren Rahmenteil 22 auszubilden. In einer Variante ist der Anschlag am hinteren Rahmenteil 22 befestigt.

Jedes der beiden Seitenteile 12, 14 nimmt je eine Welle 24, 26 lagernd auf. In der perspektivischen Ansicht gemäß Fig. 1 ist lediglich die im Seitenteil 12 aufgenommene Welle 24 zu erkennen. Die beiden Wellen 24, 26 sind drehbar in Ausnehmungen in oberen Bereichen der Füße 13, 15 sowie in der Mitte des jeweiligen Seitenteils 12, 14 gelagert.

Gemäß den in Fig. 1 dargestellten Ausführungsbeispiel weist jedes der beiden Seitenteile 12, 14 im Querschnitt ein U-Profil auf, innerhalb dessen die jeweilige Welle 24, 26 aufgenommen ist. Das jeweilige Seitenteil 12, 14 ist in Richtung auf den Stapelraum 16 offen. Diese offenen Seiten der Seitenteile 12, 14 könnten zumindest bereichsweise durch Abdeckungen (in den Figuren nicht dargestellt) geschlossen werden.

Jede der beiden Wellen 24, 26 ist mit jeweils zwei Tragelementen 32, 34 für die zu stapelnden Paletten drehfest gekoppelt. Die beiden pro Welle 24, 26 vorgesehen Tragelemente 32, 34 sind in Längsrichtung der Welle 24, 26 voneinander beabstandet angeordnet. Konkret ist jeweils ein Tragelement 32, 34 im Bereich des vorderen bzw. hinteren Endes der jeweiligen Welle 24, 26 vorgesehen.

Mit jeder der beiden Wellen 24, 26 ist je ein Hebel 28, 30 an deren vorderem Ende gekoppelt. Die Hebel 28, 30 sind jeweils als Handhebel ausgebildet und ermöglichen es, die zugeordnete Welle 24, 26 mit einem Drehmoment zu beaufschlagen.

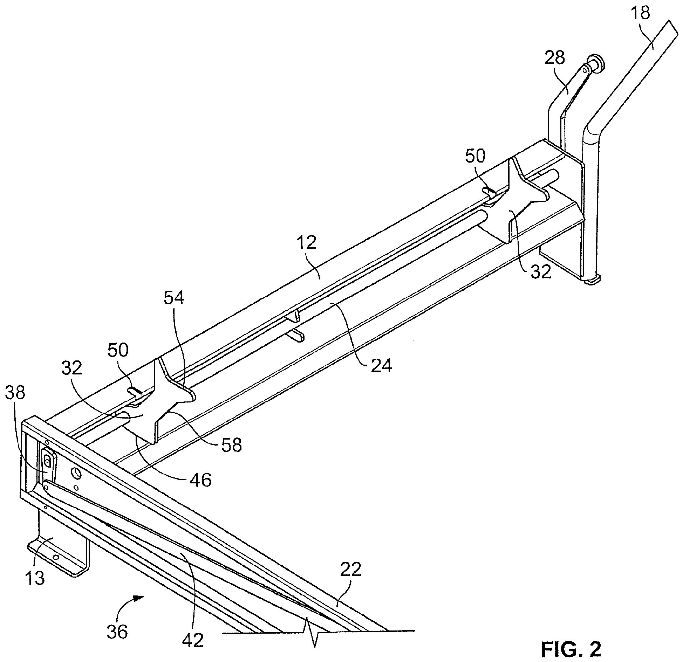

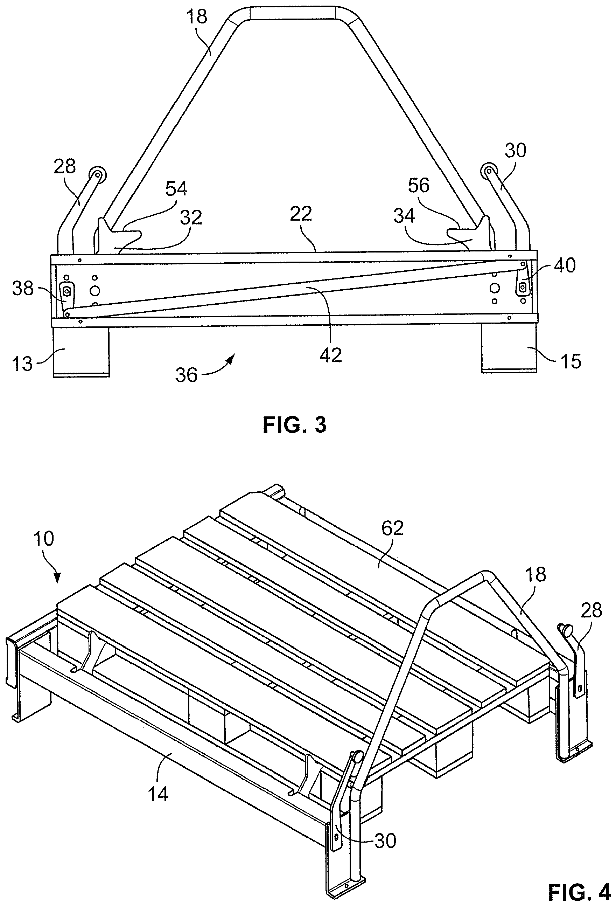

Die beiden Wellen 24, 26 sind über ein in den Figuren 2 und 3 dargestelltes Getrieben 36 miteinander gekoppelt. Das Getriebe 36 ist dazu ausgebildet, ein an einer der Wellen 24, 26 angreifendes Drehmoment und eine daraus resultierende Drehbewegung dieser Welle 24, 26 in eine Drehbewegung der anderen Welle 24, 26 umzusetzen. Diese Umsetzung erfolgt derart, dass die Tragelemente 32, 34 gemeinsam von einer Tragposition in eine Freigabeposition überführbar sind.

Die Tragposition der Tragelemente 24, 26 ist in den Figuren dargestellt. Konkret ragen in der Tragposition die Tragelemente 24, 26 in den Stapelraum 16 hinein, um, wie in Fig. 4 dargestellt, eine oder mehrere Paletten 62 oberhalb der Grundfläche aufzubewahren. In der Freigabeposition sind die Tragelemente 32, 34 hingegen aus dem Stapelraum 16 soweit entfernt, dass die gelagerten Paletten 62 einzeln entnommen werden können. Ist eine Entnahme des gesamten Palettenstapels gewünscht, kann der Bügel 18 fortgelassen oder aber, wie oben dargestellt, zumindest teilweise beweglich oder entfernbar ausgebildet sein.

Deutlich zu erkennen ist, dass das Getriebe 36 in einem vom hinteren Seitenteil 22 gebildeten Gehäuse aufgenommen ist. Aus Veranschaulichungsgründen ist eine das Gehäuse rückseitig verschließende Abdeckung in den Figuren nicht dargestellt.

Im vorliegenden Ausführungsbeispiel ist das Getriebe 36 als ein Hebelgetriebe ausgebildet. Es umfasst zwei Hebelglieder 38, 40, die jeweils mit einer der Wellen 24, 26 drehfest gekoppelt sind. Das Getriebe 36 umfasst ferner ein die beiden Hebelglieder 38, 40 (im Ausführungsbeispiel starr) miteinander koppelndes Gestänge 42.

Wie in Fig. 3 zu erkennen ist, erstrecken sich in der Tragposition der Tragelemente 32, 34 die beiden Hebelglieder 38, 40 in entgegengesetzte Richtungen. Konkret erstreckt sich das Hebelglied 38 zur Grundfläche hin und das andere Hebelglied 40 von der Grundfläche weg. Diese Anordnung der Hebelglieder 38, 40 in Kombination mit deren Kopplung über das Gestänge 42 koppelt die beiden Wellen 24, 26 in gegensinniger Weise.

So wird ein beispielsweise in die Welle 24 über den Handhebel 28 eingeleitetes Drehmoment und eine daraus resultierende Drehbewegung der Welle 24 in eine gegensinnige Drehbewegung der anderen Welle 26 umgesetzt. Wird also der Handhebel 28 in Fig. 3 nach links betätigt, verschwenken auch die über die Welle 24 drehfest damit gekoppelten Tragelemente 32 nach links. Das Getriebe 36 setzt die entsprechende Drehbewegung der Welle 24 in eine gegensinnige Drehbewegung der Welle 26 derart um, dass die mit der Welle 26 gekoppelten Tragelemente 34 (sowie der Handhebel 30) in Fig. 3 nach rechts verschwenkt werden. Bei einer Betätigung des Handhebels 28 in der beschriebenen Weise werden somit sämtliche Tragelemente 32, 34 gemeinsam aus dem Stapelraum 16 entfernt und in ihre Freigabeposition übergeführt. Das gleiche gilt bei einem am Handhebel 30 angreifenden Drehmoment, das in Fig. 3 nach rechts gerichtet ist.

Die Tragelemente 32, 34 sind derart geformt und an den Wellen 24, 26 befestigt, dass sie aufgrund der auf sie wirkenden Schwerkraft selbsttätig von der Freigabeposition in die Tragposition zurückkehren, sobald auf keine der Wellen 24, 26 mehr das oben geschilderte Drehmoment einwirkt (also der Handhebel 28 oder 30 wieder losgelassen wurde). Dabei ist die Winkelstellung der Wellen 24, 26 in Bezug auf die Tragposition definiert durch ein in Anlage Gelangen einer Unterkante 46 der Tragelemente 32 an eine untere Seitenfläche 48 des Seitenteils 12 (und in gleicher Weise für die Tragelemente 34 des Seitenteil 14). In Fig. 2 gut zu erkennen sind schlitzförmige Aussparungen 50 in einer oberen Seitenfläche des Seitenteils 12 zur bereichsweisen Aufnahme der Tragelemente 32 in der Freigabeposition. Ähnliche Aussparungen 52 sind auch im gegenüberliegenden Seitenteil 14 vorgesehen (vgl. Fig. 1).

Zusätzlich zu der (im Ausführungsbeispiel) nach unten gerichteten Seitenkanten 46 der Tragelemente 32, 34 weisen diese jeweils auch eine nach oben gerichtete Kante 54, 56 auf, die als Auflagebereich für die zu stapelnden Paletten 62 dient. Die Oberkanten 54, 56 der Tragelemente 32, 34 definieren somit gemeinsam eine Paletten-Auflage-Ebene oberhalb der Grundfläche des Stapelraums 16. Bei herkömmlichen Euro-Paletten ist diese Paletten-Auflage-Ebene ungefähr 15 bis 19 cm von der Grundfläche beabstandet. Die Gewichtskraft der von den Tragelementen 32, 34 beabstandet von der Grundfläche gehaltenen Paletten 62 wird über die Seitenteile 12, 14 und deren Füße 13, 15 in die Grundfläche eingeleitet.

In den Figuren ebenfalls zu erkennen ist der Sachverhalt, dass sich zwischen den parallel zueinander angeordneten Unter- und Oberkanten 46, 54, 56 der Tragelemente 32, 34 jeweils ein schräg zur Grundfläche 16 verlaufender Paletten-Anlagebereich 58, 60 erstreckt. Gelangt eine Palette 62, die von der Grundfläche 16 aus angehoben wird, in Anlage an diese Paletten-Anlagebereiche 58, 60 der Tragelemente 32, 34, werden die Tragelemente 32, 34 durch die Anhebebewegung aus der Tragposition in die Freigabeposition verschwenkt.

Es ist darauf hinzuweisen, dass die Anzahl sowie die Ausgestaltung der Tragelemente 32, 34 auch abweichend von dem in den Figuren exemplarisch dargestellten Ausführungsbeispiel gewählt werden kann. So können etwa drei oder mehr Tragelemente pro Welle vorgesehen werden. Des Weiteren könnte auch lediglich ein einziges Tragelement vorhanden sein, welches eine entsprechend größere Anlagefläche für die Paletten 62 aufweist. Entsprechende Abänderungen liegen daher im Rahmen des fachmännischen Handelns.

Im Folgenden wird die Funktion der Stapelvorrichtung 10 gemäß den Figuren 1 bis 4 im Zusammenhang mit dem Einlagern und Stapeln sowie der Entnahme von Paletten 62 näher erläutert. Für diese Zwecke kommt ein Hubwagen, insbesondere ein Scherenhubwagen, zum Einsatz.

Eine einzulagernde, leere Palette 62 wird in einem ersten Schritt mit dem Hubwagen über die Zufuhröffnung 20 auf der Vorderseite der Vorrichtung 10 in den Stapelraum 16 geschoben und - im Fall einer herkömmlichen Euro-Palette - um ungefähr 17 cm angehoben. In Folge dieses Anhebens der Palette 62 gelangt diese in Anlage an die schräg zur Grundfläche verlaufenden Paletten-Anlagebereiche 58, 60 der Tragelemente 32, 34. Die Tragelemente 32, 34 werden dadurch in Folge eines weiteren Anhebens der Palette 62 von dieser aus dem Stapelraum 16 heraus in ihre Freigabepositionen verschwenkt. Die Oberkante der Palette 62 gleitet dabei an den Paletten-Anlagebereichen 58, 60 der Tragelemente 32, 34 entlang und klappt diese schließlich nach außen. Sobald die Palette 62 weit genug angehoben wurde, klappen die Tragelemente 32, 34 selbsttätig (schwerkraftbedingt) in ihre Tragposition zurück.

Nach dem Zurückklappen der Tragelemente 32, 34 in ihre jeweilige Tragposition wird die Palette 62 mittels des Hubwagens um ungefähr 3 bis 4 cm abgesenkt. Die Tragelemente 32, 34 stützen in dieser Position dann die obere Bretterlage der Palette 62 von unten ab, wie dies in Fig. 4 dargestellt ist. Die Palette 62 wird so sicher auf einer ungefähr 17 cm von der Grundfläche des Stapelraums 16 beabstandeten Paletten-Auflage-Ebene gehalten. Dieser Freiraum reicht aus, um nach vollständigem Absenken und Entfernen des Hubwagens eine weitere Palette unterhalb der bereits aufgenommenen Palette 62 mit dem Hubwagen in den Stapelraum 16 zu schieben (vgl. Fig. 4). Von einem anschließenden Anheben dieser zweiten Palette wird auch die bereits eingelagerte erste Palette 62 erfasst, sobald die Oberseite der oberen Bretterlage der zweiten Palette in Anlage an die Unterseite der unteren Bretterlage der ersten Palette 62 gelangt. Auch die zweite Palette gleitet dann, wie oben beschrieben, an den Paletten-Anlagebereichen 58, 60 der Tragelemente 32, 34 entlang, wodurch diese wieder nach außen in ihre Freigabeposition überführt werden. Nach einem ausreichenden Anheben der zweiten Palette (wieder um ungefähr 17 cm) klappen die Tragelemente 32, 34 zurück in ihre Tragposition, sodass nun sowohl die zweite Palette als auch die darauf gestapelte erste Palette 62 im Stapelraum 16 oberhalb der Paletten-Auflage-Ebene eingelagert sind. Auf diese Weise können bis zu zwölf oder mehr Paletten 62 gestapelt werden.

Zur Entnahme einer einzelnen Palette 62 wird der leere Hubwagen in den Stapelraum 16 bewegt. Anschließend werden mittels des Hubwagens die bereits gestapelten Paletten 62 um ungefähr 4 cm angehoben. Daraufhin werden mittels eines der Handhebel 28, 30 die Tragelemente 32, 34 zusammen von der Tragposition in die Freigabeposition übergeführt und in der Freigabeposition gehalten. Dann erfolgt ein Absenken des Palettenstapels, bis die vorletzte Palette von den Tragelementen 32, 34 gehalten werden kann. Daraufhin wird vom Benutzer der Handhebel 28, 30 wieder losgelassen, damit die Tragelemente 32, 34 in ihre Tragposition zurückklappen und den um eine Palette 62 verringerten Palettenstapel wieder aufnehmen können. Abschließend wird die unterste Palette 62 abgesenkt, bis sie frei steht und mit dem Hubwagen aus der Stapelvorrichtung 10 herausgezogen werden kann.

Es versteht sich, dass anstelle der Handhebel 28, 30 auch ein oder mehrere Fußhebel vorgesehen werden können, um die Tragelemente 32, 34 von der Tragposition in die Freigabeposition (und gegebenenfalls zurück) überführen zu können. Ferner kann, wie oben erläutert, der Bügel 18 fortgelassen, entfernbar ausgestaltet oder beweglich vorgesehen werden, um die Entnahme des kompletten Palettenstapels zu ermöglichen

Die hier vorgestellte Paletten-Stapelvorrichtung 10 eignet sich zur Stapelung von zwölf oder mehr Paletten 62. Bei mehr als zwölf Paletten 62 oder auch sonst kann aus Sicherheitsgründen die Verwendung eines den Stapelraum 16 zumindest bereichsweise begrenzenden Gitters oder Käfigs erforderlich werden.

Paletten 62 können so mittels der Vorrichtung 10 dezentral gelagert und gehandhabt werden, und zwar auch an Stellen, an denen keine elektrischen oder hydraulischen Geräte verfügbar sind. Die komplette Vorrichtung 10 mit den eingelagerten Paletten 62 kann mit einem Hubwagen versetzt und an einer anderen Stelle platziert werden.

## Patentansprüche

1. Paletten-Stapelvorrichtung (10), umfassend
zwei Seitenteile (12, 14), die zwischen sich einen Stapelraum (16) begrenzen, wobei jedes Seitenteil (12, 14) eine Welle (24, 26) aufnimmt und wobei jede Welle (24, 26) drehfest mit einem Tragelement (32, 34) gekoppelt ist, das durch Drehen der Welle (24, 26) beweglich ist zwischen:
- einer in den Stapelraum (16) hinein ragenden Tragposition zur Stapelung von Palletten oberhalb einer Grundfläche, und
- einer aus dem Stapelraum (16) entfernten Freigabeposition;
ein Getriebe (36) zum Umsetzen eines an einer der Wellen (24) angreifenden Drehmoments in eine Drehbewegung der anderen Welle (26) derart, dass die Tragelemente (32, 34) gemeinsam von der Tragposition in die Freigabeposition überführbar sind,
**dadurch gekennzeichnet, dass**
die Tragelemente (32, 34) jeweils einen auf die Grundfläche hin gerichteten Paletten-Anlagebereich (58, 60) aufweisen, um bei Anlage an eine Palette, die von der Grundfläche aus angehoben wird, von der Tragposition in die Freigabeposition bewegt zu werden.

2. Paletten-Stapelvorrichtung nach Anspruch 1, ferner umfassend
einen mit einer der Wellen (24, 26) gekoppelten Hebel (28, 30) zur Beaufschlagung der Welle (24, 26) mit einem Drehmoment.

3. Paletten-Stapelvorrichtung nach Anspruch 2, wobei
der Hebel als Hand- oder Fußhebel (28, 30) ausgebildet ist.

4. Paletten-Stapelvorrichtung nach Anspruch 2 oder 3, wobei
die Seitenteile (12, 14), in Bezug auf eine Palettenzuführung in den Stapelraum (16), jeweils ein vorderes und ein hinteres Ende aufweisen, wobei sich eine Zufuhrrichtung von vorne nach hinten erstreckt, und wobei der Hebel (28, 30) im Bereich des vorderen Endes eines der Seitenteile (12, 14) vorgesehen ist.

5. Paletten-Stapelvorrichtung nach einem der vorhergehenden Ansprüche, wobei
die Seitenteile (12, 14), in Bezug auf eine Palettenzuführung in den Stapelraum (16), jeweils ein vorderes und ein hinteres Ende aufweisen, wobei sich eine Zufuhrrichtung von vorne nach hinten erstreckt, und wobei zwischen den Seitenteilen im Bereich der hinteren Enden ein die Palettenzuführung in den Stapelraum begrenzender Anschlag (22) vorgesehen ist.

6. Paletten-Stapelvorrichtung nach Anspruch 5, wobei
der Anschlag an einem die zwei Seitenteile (12, 14) an deren hinteren Enden verbindenden Rahmenteil (22) ausgebildet ist.

7. Paletten-Stapelvorrichtung nach einem der vorhergehenden Ansprüche, wobei
die Seitenteile (12, 14), in Bezug auf eine Palettenzuführung in den Stapelraum (16), jeweils ein vorderes und ein hinteres Ende aufweisen, wobei sich eine Zufuhrrichtung von vorne nach hinten erstreckt, und wobei die zwei Seitenteile an deren vorderen Enden durch ein Rahmenteil (18) verbunden sind.

8. Paletten-Stapelvorrichtung nach Anspruch 7, wobei das Rahmenteil (18) zumindest teilweise entfernbar oder beweglich ausgebildet ist, um eine Vorderseite des Stapelraums (16) für eine Entnahme eines Palettenstapels freizugeben.

9. Paletten-Stapelvorrichtung nach einem der vorhergehenden Ansprüche, wobei
das Getriebe ein Hebelgetriebe (36) ist.

10. Paletten-Stapelvorrichtung nach Anspruch 9, wobei
das Hebelgetriebe (36) zwei Hebelglieder (38, 40) die jeweils mit einer der Wellen (24, 26) drehfest gekoppelt sind, und ein die zwei Hebelglieder miteinander koppelndes Gestänge (42) umfasst.

11. Paletten-Stapelvorrichtung nach einem der vorhergehenden Ansprüche, wobei
das Getriebe (36) ausgebildet ist, um die an der einen Welle (24) angreifende Drehbewegung in eine gegensinnige Drehbewegung der anderen Welle (26) umzusetzen.

12. Paletten-Stapelvorrichtung nach einem der vorhergehenden Ansprüche, wobei
die Seitenteile (12, 14), in Bezug auf eine Palettenzuführung in den Stapelraum (16), jeweils ein vorderes und ein hinteres Ende aufweisen, wobei sich eine Zufuhrrichtung von vorne nach hinten erstreckt, und wobei das Getriebe (36) im Bereich der hinteren Enden der zwei Seitenteile (12, 14) vorgesehen ist; und/oder wobei die Paletten-Stapelvorrichtung ferner umfasst
Füße (13, 15), welche die Seitenteile (12, 14) beabstandet von der Grundfläche halten, um ein Anheben der Vorrichtung (10) mittels eines unterhalb der Seitenteile (12, 14) eingefahrenen Hubwagens zu gestatten.

13. Paletten-Stapelvorrichtung nach einem der vorhergehenden Ansprüche, wobei mit jeder Welle (24, 26) zwei Tragelemente (32, 34) drehfest gekoppelt sind, die in Längsrichtung der Welle (24, 26) voneinander beabstandet vorgesehen sind; und/oder
wobei
die Tragelemente (32, 34) gemeinsam eine Paletten-Auflage-Ebene definieren und wobei die Paletten-Auflage-Ebene um mehr als eine nominelle Paletten-Höhe oberhalb der Grundfläche liegt.

14. Paletten-Stapelvorrichtung nach Anspruch 1, wobei
der Paletten-Anlagebereich schräg zur Grundfläche verläuft.

15. Paletten-Stapelvorrichtung nach einem der vorhergehenden Ansprüche, wobei
die Tragelemente (32, 34) selbsttätig aufgrund der auf die Tragelemente wirkenden Schwerkraft und/oder einer oder mehrerer vorgesehenen elastischen Elemente aus der Freigabeposition zur Tragposition zurückkehren.

## Claims

1. A pallet stacking device (10) comprising
two side members (12, 14) defining a stacking space (16) therebetween, wherein each side member (12, 14) receives a shaft (24, 26), and wherein each shaft (24, 26) is non-rotatably coupled to a support member (32, 34) which is movable by rotation of the shaft (24, 26) between:
- a support position projecting into the stacking space (16) for stacking pallets above a base surface, and
- a release position removed from the stacking area (16);
a gear (36) for converting a torque acting on one of the shafts (24) into a rotary movement of the other shaft (26) in such a way that the supporting elements (32, 34) can be jointly transferred from the supporting position to the release position,
**characterized in that** the support members (32, 34) each have a pallet abutment portion (58, 60) directed toward the base surface for being moved from the support position to the release position upon abutment with a pallet being lifted from the base surface.

2. The pallet stacking apparatus of claim 1, further comprising
a lever (28, 30) coupled to one of the shafts (24, 26) for applying torque to the shaft (24, 26).

3. The pallet stacking device according to claim 2, wherein
the lever is designed as a hand or foot lever (28, 30).

4. The pallet stacking device according to claim 2 or 3, wherein
the side members (12, 14), with respect to a pallet feed into the stacking space (16), each have a front end and a rear end, wherein a feed direction extends from front to rear, and wherein the lever (28, 30) is provided in the region of the front end of one of the side members (12, 14).

5. The pallet stacking device according to any one of the preceding claims, wherein
the side members (12, 14), with respect to a pallet feed into the stacking space (16), each have a front and a rear end, wherein a feed direction extends from front to rear, and wherein a stop (22) limiting the pallet feed into the stacking space is provided between the side members in the region of the rear ends.

6. The pallet stacking device according to claim 5, wherein
the stop is formed on a frame member (22) connecting the two side members (12, 14) at their rear ends.

7. The pallet stacking device according to any one of the preceding claims, wherein
the side members (12, 14), with respect to a pallet feed into the stacking space (16), each have a front end and a rear end, wherein a feed direction extends from front to rear, and wherein the two side members are connected at their front ends by a frame member (18).

8. The pallet stacking apparatus of claim 7, wherein the frame member (18) is at least partially removable or movable to expose a front side of the stacking space (16) for removal of a stack of pallets.

9. The pallet stacking device according to any one of the preceding claims, wherein
the gear is a lever gear (36).

10. The pallet stacking apparatus of claim 9, wherein
the lever gear (36) comprises two lever members (38, 40) each coupled to one of the shafts (24, 26) for rotation therewith, and a linkage (42) coupling the two lever members to each other.

11. The pallet stacking device according to any one of the preceding claims, wherein
the gear (36) is designed to convert the rotary movement acting on one shaft (24) into a rotary movement in the opposite direction of the other shaft (26).

12. The pallet stacking device according to any one of the preceding claims, wherein
the side members (12, 14), with respect to a pallet feed into the stacking space (16), each have a front end and a rear end, wherein a feed direction extends from front to rear, and wherein the gear (36) is provided in the region of the rear ends of the two side members (12, 14); and/or said pallet stacking device further comprising
feet (13, 15) supporting the side members (12, 14) spaced from the base surface to permit lifting of the device (10) by means of a lift truck moved below the side members (12, 14).

13. The pallet stacking apparatus according to any one of the preceding claims, wherein two support members (32, 34) are non-rotatably coupled to each shaft (24, 26) and are provided spaced apart from each other in the longitudinal direction of the shaft (24, 26); and/or
wherein
the support members (32, 34) collectively define a pallet support plane and wherein the pallet support plane is above the base surface by more than a nominal pallet height.

14. The pallet stacking apparatus of claim 1, wherein.
the pallet abutment portion runs at an angle to the base surface.

15. The pallet stacking device according to any one of the preceding claims, wherein
the support members (32, 34) automatically return from the release position to the support position due to the force of gravity acting on the support members and/or due to one or more elastic elements being provided.

## Revendications

1. Dispositif d'empilage de palettes (10), comprenant
deux parties latérales (12, 14) qui délimitent entre elles un espace d'empilage (16), chaque partie latérale (12, 14) recevant un arbre (24, 26) et chaque arbre (24, 26) étant accouplé de manière solidaire en rotation à un élément de support (32, 34) qui est mobile par rotation de l'arbre (24, 26) entre :
- une position de support faisant saillie dans l'espace d'empilage (16) pour l'empilage de palettes au-dessus d'une surface de base, et
- une position de libération éloignée de l'espace d'empilage (16) ;
un mécanisme de transmission (36) pour convertir un couple de rotation agissant sur l'un des arbres (24) en un mouvement de rotation de l'autre arbre (26) de telle sorte que les éléments de support (32, 34) puissent être transférés ensemble de la position de support dans la position de libération,
**caractérisé en ce que**
les éléments de support (32, 34) comprennent une zone de contact de palette respective (58, 60) dirigée vers la surface de base, pour être déplacés de la position de support dans la position de libération lors du contact avec une palette qui est levée à partir de la surface de base.

2. Dispositif d'empilage de palettes selon la revendication 1, comprenant en outre
un levier (28, 30) accouplé à l'un des arbres (24, 26) pour appliquer un couple à l'arbre (24, 26).

3. Dispositif d'empilage de palettes selon la revendication 2, dans lequel
le levier est conçu comme un levier à main ou à pied (28, 30).

4. Dispositif d'empilage de palettes selon la revendication 2 ou 3, dans lequel
les parties latérales (12, 14) comprennent chacune une extrémité avant et une extrémité arrière par rapport à une amenée de palettes dans l'espace d'empilage (16), une direction d'amenée s'étendant de l'avant vers l'arrière, et le levier (28, 30) étant prévu au niveau de l'extrémité avant de l'une des parties latérales (12, 14).

5. Dispositif d'empilage de palettes selon l'une des revendications précédentes, dans lequel
les parties latérales (12, 14) comprennent chacune une extrémité avant et une extrémité arrière par rapport à une amenée de palettes dans l'espace d'empilage (16), une direction d'amenée s'étendant de l'avant vers l'arrière, et une butée (22) limitant l'amenée de palettes dans l'espace d'empilage étant prévue entre les parties latérales au niveau des extrémités arrière.

6. Dispositif d'empilage de palettes selon la revendication 5, dans lequel
la butée est formée sur une partie cadre (22) reliant les deux parties latérales (12, 14) à leurs extrémités arrière.

7. Dispositif d'empilage de palettes selon l'une des revendications précédentes, dans lequel
les parties latérales (12, 14) comprennent chacune une extrémité avant et une extrémité arrière par rapport à une amenée de palettes dans l'espace d'empilage (16), une direction d'amenée s'étendant de l'avant vers l'arrière, et les deux parties latérales étant reliées à leurs extrémités avant par une partie cadre (18).

8. Dispositif d'empilage de palettes selon la revendication 7, dans lequel
la partie cadre (18) est conçue au moins partiellement amovible ou mobile afin de libérer un côté avant de l'espace d'empilage (16) pour un prélèvement d'une pile de palettes.

9. Dispositif d'empilage de palettes selon l'une des revendications précédentes, dans lequel
le mécanisme de transmission est un mécanisme à leviers (36).

10. Dispositif d'empilage de palettes selon la revendication 9, dans lequel
le mécanisme à leviers (36) comprend deux éléments de levier (38, 40) accouplés respectivement de manière solidaire en rotation à l'un des arbres (24, 26) et une tringle (42) accouplant les deux éléments de levier l'un à l'autre.

11. Dispositif d'empilage de palettes selon l'une des revendications précédentes, dans lequel
le mécanisme de transmission (36) est conçu pour convertir le mouvement de rotation agissant sur l'un des arbres (24) en un mouvement de rotation en sens contraire de l'autre arbre (26).

12. Dispositif d'empilage de palettes selon l'une des revendications précédentes, dans lequel
les parties latérales (12, 14) comprennent chacune une extrémité avant et une extrémité arrière par rapport à une amenée de palettes dans l'espace d'empilage (16), une direction d'amenée s'étendant de l'avant vers l'arrière, et le mécanisme de transmission (36) étant prévu au niveau des extrémités arrière des deux parties latérales (12, 14) ; et/ou dans lequel le dispositif d'empilage de palettes comprend en outre
des pieds (13, 15) qui maintiennent les parties latérales (12, 14) à une certaine distance de la surface de base pour permettre le levage du dispositif (10) au moyen d'un chariot de levage introduit sous les parties latérales (12, 14).

13. Dispositif d'empilage de palettes selon l'une des revendications précédentes, dans lequel
deux éléments de support (32, 34) sont couplés de manière solidaire en rotation à chaque arbre (24, 26), qui sont prévus espacés l'un de l'autre dans la direction longitudinale de l'arbre (24, 26) ; et/ou dans lequel
les éléments de support (32, 34) définissent ensemble un plan de support de palettes, le plan de support de palettes étant situé au-dessus de la surface de base à une hauteur supérieure à une hauteur nominale de palette.

14. Dispositif d'empilage de palettes selon la revendication 1, dans lequel
la zone de contact de palette est inclinée par rapport à la surface de base.

15. Dispositif d'empilage de palettes selon l'une des revendications précédentes, dans lequel
les éléments de support (32, 34) reviennent automatiquement de la position de libération vers la position de support en raison de la force de gravité agissant sur les éléments de support et/ou d'un ou plusieurs éléments élastiques prévus.
